# EUROPEAN PATENT APPLICATION

(11) **EP 0 913 995 A1**
(43) Date of publication of application: **06.05.1999**
(21) Application number: 97402602.3
(22) Date of filing: 31.10.1997
(51) Int. Cl.: H04N 5/445

(54) **Display system**

(71) Applicant: MOTOROLA, INC., Schaumburg, IL 60196 (US)
(72) Inventor: Kotzin, Michael D., Buffalo Grove, Illinois 60089 (US); van den Heuvel, Anthony P., Fountain Hills, Arizona 85268 (US)
(74) Representative: Joly, Jean-Jacques

(57) **Abstract**

A display system (100) includes a display (102), a first pair of strobing eyeglasses (104) and a second pair of strobing eyeglasses (110). The first and second pairs of strobing eyeglasses (104) are connected to the display (102) by respective first and second cables (108, 114). The first pair of strobing eyeglasses (104) are worn by a first observer (106) and the second pair of strobing eyeglasses (110) are worn by a second observer (112). Viewing of a first and a second television channel is achieved by time multiplexing the frames of each channel in an alternating manner. Each of the first and second strobing eyeglasses (104, 110) is synchronised to the appearance on the display (102) of frames corresponding to the desired television channel to be viewed.

## Description

### Field of the Invention

The present invention relates to a display system of the type used to view images, for example, television displays or laptop computer displays.

### Background of the Invention

The desire for individuals to selectively view or not view certain images on a display is well known. For example, where a single display is viewed, such as a television, it is not uncommon for more than one viewer to desire to view different channels. A known solution to this problem is to provide a picture-in-picture facility which enables a single display to generate at least one image inset within a main image. However, such a solution is undesirable, since the inset image is usually small and, therefore, harder to view than the main image. The presence of an image within another image also obscures part of the main image, thereby spoiling viewing of the main image.

It is also desirable to prevent the viewing of a display by an unauthorised third party, for example the screen of a laptop computer when travelling. A proposed solution involves overlaying the screen with a collimating shield, for example, a plastics plate having an array of perforations. However, such a shield does not enable an additional viewer to view the screen whilst still preventing the unauthorised third party from viewing the screen.

It is therefore an object of the present invention to provide a display system which obviates or mitigates the above disadvantages.

### Summary of the Invention

According to a first aspect of the present invention, there is provided a display system comprising a display having a scanning cycle, the display being arranged to display a first image during a first portion of the scanning cycle and a send image during a second portion of the scanning cycle, wherein shutter means are arranged to selectively discern the first image from at least the first and second images.

According to a second aspect of the present invention, there is provided a method of displaying images in a display system having a display and an optical shutter, the method comprising the steps of displaying a first image, displaying a second image, and oscillating the optical shutter at a predetermined frequency so as to selectively permit the first image to pass through the optical shutter.

Other, preferred, features and advantages are set forth in and will become apparent from, dependent Claims 2 to 13, and the following description and accompanying drawings.

Alternatively, a single video generator can be employed having a data input coupled to a random access memory (RAM), the data relating to images being retrieved from the RAM in an alternating manner. The alternation of the retrieval of image data from the RAM is controlled by a control unit.

The choice of the image to be displayed can be varied by changing a predetermined address location in the circuitry of the video generator. It is thus possible to rapidly switch the image being displayed, since the modification of a start address for extracting a block of video memory may be achieved simply and quickly and in synchronism with the opening and closing of the shutter.

### Brief Description of the Drawings

The present invention will now be described, by way of exsample, with reference to the accompanying drawings, in which:
FIG. 1 is a schematic diagram of a display system constituting an embodiment of the invention;
FIG. 2 is a block diagram of an image multiplexing apparatus for the system of FIG. 1;
FIG. 3 is a schematic diagram of a pair of eyeglasses for the system of FIG. 1;
FIG. 4 is a schematic diagram of an eyepiece of the eyeglasses of FIG. 3;
FIG. 5 is a graph of multiplexed images over a period of time;
FIG. 6 is a flow diagram of a method of image multiplexing for the systems of FIGs. 1 and 5;
FIG. 7 is a graph of synchronising strobing signals for the eyeglasses of FIG. 1;
FIG. 8 is a flow diagram of a method of operating the eyeglasses of FIGs. 1, 3, 4 and 6;
FIG. 9. is a schematic diagram of a display system constituting another embodiment of the invention, and
FIG. 10 is a graph of image and masking multiplexing over a period of time;

### Description of a Preferred Embodiment

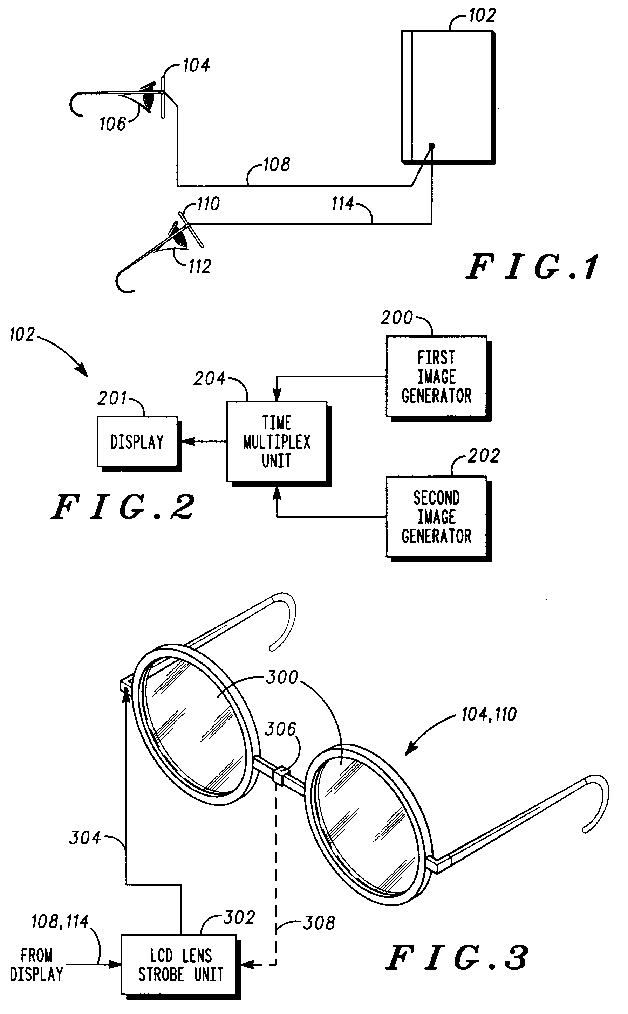

Referring to FIG. 1, a display system 100 comprises a display 102 couples to a first pair of strobing eyeglasses 104 and a second pair of strobing eyeglasses 110, via a first and a second electrical cable 108, 114, respectively. The first and second pairs of eyeglasses 104, 110 are worn by a first observer 106 and a second observer 112, respectively.

The Display 102 (FIG. 2) comprises a display panel 201, a first image generator 200, and a second image generator 202 connected to an image multiplexing unit 204. The first and second image generators 200, 202 of display 102 can be implemented using independent video generators and generate video signals representing respectively images I₁ and I₂. Output terminals (not shown) of the first and second image generators 200, 202 (which provide the video signals) are connected to a controlled, single pole, single electronic throw switch (the image multiplexing unit 204), the image multiplexing unit 204 being connected between the image generators 200, 202 and the display panel 201. In such an arrangement, the image generators 200, 202 are in synchronism and provide synchronised video signals and the throw switch is coupled to the display panel 201. In this way, information relating to the first and second images I₁, I₂ can be unit 204 is connected to the display panel 201 thereby displaying information relating to the first and second images I₁ and I₂ in an alternating manner.

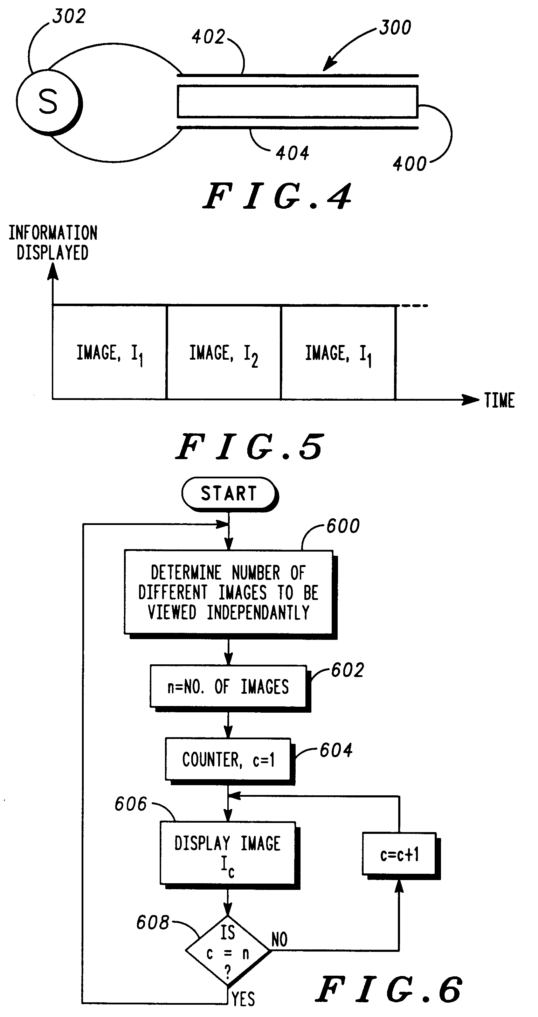

The eyeglasses 104, 110 in FIG. 3 comprise a pair of strobing eyepieces 300, the eyeglasses 104, 110 being respectively connected to the first and second cables 108, 114 via a strobing unit 302, in frequency and phase synchronism with the multiplexing unit 204 of FIG. 2, and a third electrical cable 304. The strobing unit 302 generates a potential difference which is strobed across each eyepiece 300 of the pair of eyepieces in response to a synchronising clock signal transmitted from the display 102 via the first and second cables 108, 114. The first and second cables 108, 114 can be replaced with a radio or infra-red link having any appropriate structure known in the art, including for example, a sensor 306.

Referring to FIG. 4, each eyepiece 300 comprises a liquid crystal (LC) panel 400 (including appropriate layers, such as polarisers) sandwiched between a first electrode 402 and a second electrode 404. The first and second electrodes 402, 404 are coupled to the strobing unit 302 via the third cable 304. It must be appreciated that although a relatively simple construction of the eyepieces 300 has been described for exemplary purposes, other constructions known to those skilled in the art can also be employed. Additionally, the eyepieces may comprise optical elements for correcting any vision defects or aberrations of the first or second observers 106, 112. Instead of the liquid crystal panel 400, a display using an electooptically active transparent material, such as lanthanum doped lead zirconate titanate (PLZT), can be used.

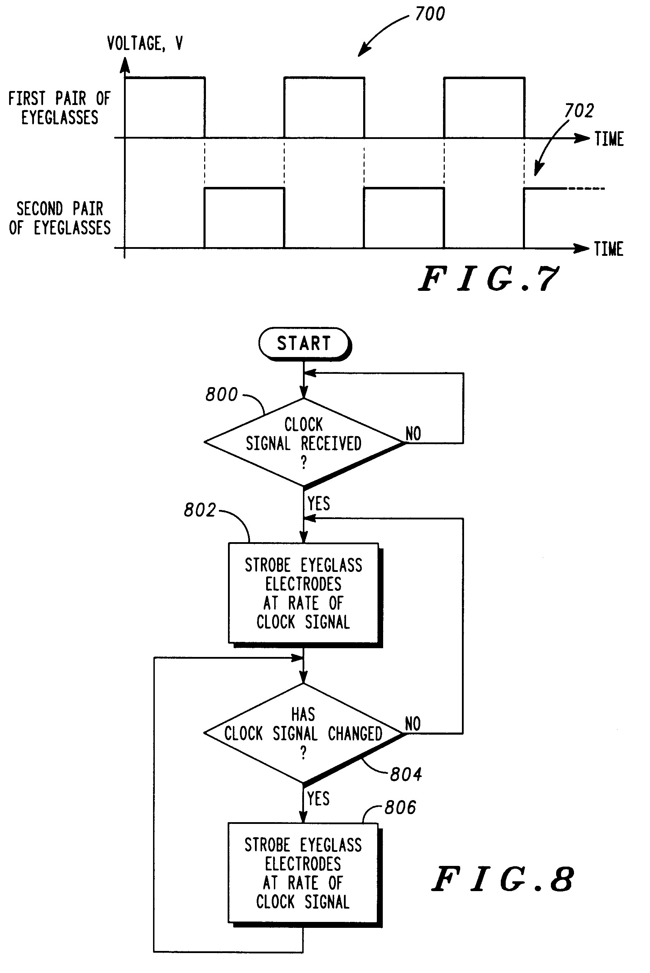

During normal operation (FIG. 6), the display 102 determines the number of different image to be displayed and viewed by different observers (step 600). In this example, the display of two real time images will be described, but a larger number of images is envisaged as also being possible. A variable, n, is set, equal to the number of images to be displayed (stop 602). The images to be displayed include channels of video typically constituting a constantly changing visual image formed from a plurality of frames. A counter variable, c, is then initialised to 1 (step 604).

The display 102 then displays one of the two images I₁ and I₂ (step 606) and verifies if the maximum number of images has been reached (step 608), i.e. whether one frame of each of the different images has been displayed. If one frame of each of the images has not been displayed, the counter, c, is incremented by one and a frame of the next image I_{c} is displayed by the display 102. This process is continued until one frame of each of the images have been displayed. This routine is repeated for the next frame for each of the two images I₁, I₂, the number of different images to be displayed and viewed independently being determined (step 600) once more. The step of determining the number of different images to be displayed and viewed independently (step 600) is repeated in order to accommodate the desire to display and view additional or fewer images, i.e. in the event of the arrival or departure of viewers (not shown). However, this feature is not essential to the invention. It can be seen that successive frames of each of the two images I₁, I₂, are displayed in an alternating manner for as long as is desired.

Turning to FIG. 5, the display 102 multiplexes the real time images I₁ and I₂, in time on a frame by frame basis. In the present example already described above, a frame of the first image I₁ is displayed for a predetermined period of time, for example 1/60 second, and a frame of the second image I₂, is then displayed subsequently for a predetermined period of time. This routine is repeated by displaying the next frame of the first image I₁ and the next frame of the second image I₂, as described above. The predetermined period of time can vary depending upon the type of display and/or scanning technique employed. For example, and as employed above for a conventional television image, the period can be approximately equal to the field scan rate.

In order to be able to view the correct multiplexed image, the display 102 transmits a first clock synchronisation signal 700 and a second clock synchronisation signal 702 via the first and second electrical cables 108, 114 (FIG. 7). The clock signals 700, 702 are substantially in antiphase, thereby preventing the wrong image from being viewed through the first and second pairs of eyeglasses 104, 110. It should be appreciated that the clock signals 700, 702 would not be in antiphase if more than two pairs of eyeglasses were being used. The first clock signal 700 is received by the strobing unit 302 which responds by generating an in-phase strobing signal to strobe the LC panels 400 between a transmissive mode to a non-transmissive mode. Referring to FIG. 8, the strobing unit 302 monitors the first electrical cable 108 in order to detect the first synchronising clock signal 700 (step 800). Upon detection of the first clock signal 700, the strobing unit 302 generates a strobed potential difference across the electrodes of the LC panels 400 which is in-phase with the first clock signal 700 (step 802). This process continues until the strobing unit detects a change in the frequency of the strobe signal (step 804), signifying the addition or reduction in the number of images to be displayed. Upon detection at the change of frequency of the first clock signal 700, the strobing unit 302 varies the frequency of the potential difference generated across the LC panel 400 so as to match the new clock signal frequency (step 806). This process is then repeated until viewing of the display is no longer desired.

A similar process is employed for the second pair of eyeglasses 100 using a corresponding strobing unit, the second clock synchronisation signal 702 and the second electrical cable 114.

In this way, observers 106 and 112 can view respective different images, I₁, I₂, for example, respective images corresponding to different television channels.

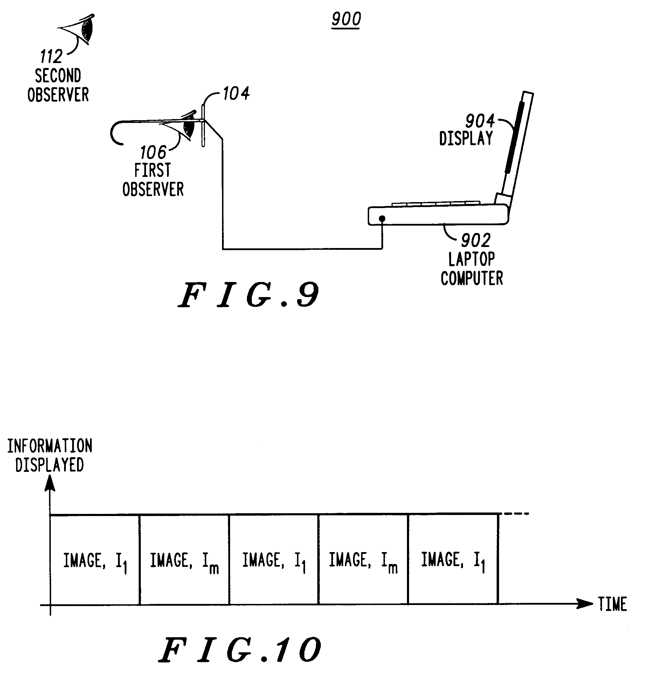

In an alternative embodiment (FIG. 9), the display system 100 can be employed as a visual equivalent of an anti-eavesdropping system 900. In such a system, the first observer 106 wears the first pair of strobing eyeglasses 104 as described above. The first pair of eyeglasses 104 is connected to a laptop computer 902, having a display 904, instead of the display 102 described above. It should be noted that it is not intended to limit the invention to the use of laptop computers and that the use of other displays the viewing of which is undesirable by third parties, is also envisaged.

The second observer 112, whose observation of the display 904 is undesirable, is not wearing a pair of strobing eyeglasses connected to the laptop computer 902.

Instead of displaying the first and second images I₁ and I₂ as described above with reference to FIG. 6, the first or second image I₁, I₂ is replaced with a masking image Iₘ. Thus, in this example, the one frame of the first real-time image I₁ intended for viewing by the first observer 106 is displayed (FIG. 10), followed by the masking image Iₘ. Another frame of the first image I₁ is then displayed, followed by the masking image Iₘ again. This process is repeated until the first observer no longer wishes to view the display 904. It is conceivable that the masking image Iₘ can be a real time masking image comprising a series of frames, each or at least some, of which can be displayed in an alternating manner with the frames corresponding to the image I₁ as described above in relation to the first embodiment.

In order to view the first image I₁, the first pair of strobing glasses 104 are synchronised to the clock signal corresponding to the display of the first image on the display 904. It is thus possible to view the image I₁, free from obscuration by the masking image, Iₘ. The resultant image comprising alternating frames of the first image I₁ and the masking image Iₘ can be viewed by any third party not wearing the pair of strobing eyeglasses 104 correctly synchronised to the display of the first image I₁. The resultant image is unintelligible to the third party.

The masking image Iₘ can be a complimentary image of a frame of the first image I₁, to be viewed, the resultant image to the third party not wearing the pair of strobing eyeglasses 104 being a blank image.

A mask unit (not shown) can be used to co-operate with the second image generator 202 to generate the masking image Iₘ in an optimum manner, for example, to generate a "confusion" image when the display 904 is viewed without the pair of strobing eyeglasses 104. An example of such the "confusion" image is when spreadsheet software is being used, the mask unit can generate (in co-operation with the second image generator 202) spurious or random numbers in the fields of the spreadsheet being viewed by the user wearing the eyeglasses 104. Alternatively, if word processing software is being used, nonsensical or confusing text can be displayed in the document being viewed by means of the combination of the masking image Iₘ and the first image I₁ which, to the user not wearing the eyeglasses 104, would be incomprehensible.

A particular masking pattern can be employed in order to save energy when displaying images when, for example, an emissive type display is being used. As an example, in the case of the spreadsheet mentioned above, only elements of the spreadsheet containing information can be "whitened" or obscured by the masking image Im, as opposed to masking the whole image, thereby saving display power required.

Instead of using the first or second image generator 200, 202 to generate the masking image, "noise" can be displayed in place of the masking image Iₘ, according to any technique known in the art. Additionally or alternatively, the masking image Iₘ can comprise variations in colour.

Although the above embodiments have been described in the context of displaying frames of first and second images at predetermined temporal frequencies of display, it is possible to display the multiplexed frames of the first or second images I₁, I₂ (including the masking image Iₘ) at irregular intervals.

## Claims

1. A display system comprising a display arranged to display a first image for viewing by a user, display of the first image being temporally spaced from display of a second image by the display, and an optical shutter arranged to oscillate at a predetermined interval so as to selectively permit the first image to pass through the optical shutter.

2. A system as claimed in Claim 1, wherein the predetermined interval is a predetermined frequency.

3. A system as claimed in Claim 1 or Claim 2, wherein the second image is a masking image.

4. A system as claimed in Claim 3, wherein the masking image is the inverse of the first image.

5. A system as claimed in any one of the preceding claims, wherein the masking image comprises a random sequence of information.

6. A system as claimed in any one of the preceding claims, wherein the masking image comprises variations in colour.

7. A system as claimed in any one of the preceding claims, wherein the first image is a frame forming part of a real-time image.

8. A system as claimed in any one of the preceding claims, wherein the shutter is arranged to be in synchronism with display of the first image.

9. A system as claimed in Claim 8, wherein the display is arranged to display synchronisation information and the optical shutter comprises a sensor arranged to read the synchronisation information.

10. A system as claimed in Claim 8, further comprising providing the shutter with a sensor arranged to synchronise the shutter with display of the first image.

11. A system as claimed in Claim 8, further comprising an encryptor to encrypt information relating to synchronisation.

12. A system as claimed in any one of Claims 3 to 11, wherein the masking image is generated so as to selectively obscure a predetermined portion of the first image.

13. A system as claimed in any one of the preceding claims, further comprising an infra-red link between the display and the optical shutter.

14. A method of displaying images in a display system having a display and an optical shutter, the method comprising the steps of:
displaying a first Image,
displaying a second image, and
oscillating the optical shutter at a predetermined interval so as to selectively permit the first image to pass through the optical shutter.
